# EUROPEAN PATENT APPLICATION

(11) **EP 2 509 375 A1**
(43) Date of publication of application: **10.10.2012**
(21) Application number: 10850974.6
(22) Date of filing: 19.07.2010
(51) Int. Cl.: H04W 64/00

(54) **MOBILE TERMINAL LOCATION SYSTEM, METHOD AND MOBILE TERMINAL**

(30) Priority: 05.05.2010 CN 201010172384
(71) Applicant: ZTE Corporation, Shenzhen, Guangdong 518057 (CN)
(72) Inventor: LI, Jinmin, Shenzhen Guangdong 518057 (CN); XU, Ling, Shenzhen Guangdong 518057 (CN); SHI, Yu, Shenzhen Guangdong 518057 (CN); YUE, Hui, Shenzhen Guangdong 518057 (CN)
(74) Representative: Kling, Simone
(86) International application number: PCT/CN2010/075267
(87) International publication number: WO 2011/137605

(57) **Abstract**

The disclosure discloses a method for positioning a mobile terminal, which comprises: a server sends a push notification to a mobile terminal; the mobile terminal performs self-positioning after receiving the push notification, to acquire geographical position information regarding the mobile terminal, and sends the geographical position information to the server; the server receives and displays the geographical position information sent by the mobile terminal. The disclosure also discloses a system for positioning a mobile terminal for implementing the method for positioning a mobile terminal and a mobile terminal. With such method and device, the server can be used to send a push notification to the mobile terminal after a user finds that the mobile terminal is lost. The mobile terminal positions geographical position information thereof and sends the geographical position information to the server to help the user retrieve the mobile terminal.

## Description

### TECHNICAL FIELD

The disclosure relates to the technology of mobile communications, particularly to a system and method for positioning a mobile terminal and to a mobile terminal.

### BACKGROUND

With the continuous development of mobile communication technologies, a mobile terminal, such as a mobile phone, a Personal Digital Assistant (PDA) and the like is no longer used as a simple communication tool only. Because the above mobile terminal has advantages of small volume, easiness in taking, convenience in use and the like, it has gradually become a personal information storage carrier for the user. Many users of the mobile terminal get used to storing important personal information involving personal information security, such as contacts, photos, schedules and the like in the mobile terminal.

After the mobile terminal is lost, its operator cannot help the user retrieve the lost mobile terminal because the operator only provides Subscriber Identity Module (SIM) card loss reporting and re-issuing services, and cannot provide specific position information of the mobile terminal.

### SUMMARY

The disclosure mainly aims to provide a system and method for positioning a mobile terminal, and also provide a mobile terminal, with which geographical position information of a lost mobile terminal can be provided to a user to help the user retrieve the mobile terminal.

The disclosure provides a method for positioning a mobile terminal, which comprises: sending, by a server, a push notification to a mobile terminal; performing, by the mobile terminal, self-positioning after receiving the push notification, to acquire geographical position information regarding the mobile terminal; sending, by the mobile terminal, the geographical position information to the server; and receiving and outputting, by the server, the geographical position information sent by the mobile terminal.

Preferably, the method may further comprise: after the step of receiving and outputting, by the server, the geographical position information sent by the mobile terminal, sending, by the server, a locking command and/or a deleting command to the mobile terminal according to a device management protocol; and performing, by the mobile terminal, automatic locking and/or deleting, by the mobile terminal, data in a memory, after receiving the locking command and/or the deleting command.

Preferably, the method may further comprise: before the step of sending, by the server, the push notification to the mobile terminal, sending, by the mobile terminal, matching information between an International Mobile Equipment Identity (IMEI) and an International Mobile User Identity (IMSI) of the mobile terminal to the server, when detecting that a Subscriber Identity Module (SIM) card has been changed after being started.

Preferably, the method may further comprise: updating, by the server, previous matching information between the IMEI and the IMSI of the mobile terminal according to the received matching information between the IMEI and the IMSI of the mobile terminal, and further judging, by the server, whether the updated IMEI is an IMEI of the mobile terminal registered at the server.

A system for positioning a mobile terminal, comprises a server and a mobile terminal, wherein the server is configured to send a push notification to the mobile terminal, and to receive geographical position information sent by the mobile terminal; and the mobile terminal further comprises a positioning module, which is configured to perform self-positioning after receiving the push notification, so as to acquire the geographical position information regarding the mobile terminal, and to send the geographical position information to the server.

Preferably, the server may be further configured to send a locking command and/or a deleting command to the mobile terminal according to a device management protocol; and the mobile terminal may further comprise a locking module and a deleting module, wherein the locking module is configured to lock the mobile terminal after receiving the locking command; the deleting module is configured to delete data in a memory of the mobile terminal after receiving the deleting command.

Preferably, the mobile terminal may further comprise a Subscriber Identity Module (SIM) card detecting module and a matching information sending module, wherein the SIM card detecting module is configured to detect whether an SIM card of the mobile terminal is changed; and the matching information sending module is configured to send matching information between an International Mobile Equipment Identity (IMEI) and an International Mobile User Identity (IMSI) of the mobile terminal to the server when the SIM card is changed.

Preferably, the server may be further configured to update previous matching information between the IMEI and the IMSI of the mobile terminal after receiving the matching information between the IMEI and the IMSI, and to judge whether the updated IMEI is an IMEI of the mobile terminal registered at the server.

A mobile terminal comprises a positioning module, which is configured to perform self-positioning after receiving a push notification from a server, so as to acquire geographical position information regarding the mobile terminal, and to send the geographical position information to the server.

Preferably, the mobile terminal may further comprise a locking module and a deleting module, wherein the locking module is configured to lock the mobile terminal after receiving a locking command sent by the server; and the deleting module is configured to delete data in a memory of the mobile terminal after receiving a deleting command sent by the server.

Preferably, the mobile terminal may further comprise: a Subscriber Identity Module (SIM) card detecting module, which is configured to detect whether an SIM card of the mobile terminal is changed; and a matching information sending module, which is configured to send matching information between an International Mobile Equipment Identity (IMEI) and an International Mobile User Identity (IMSI) to the server when the SIM card of the mobile terminal is changed.

With the system and method for positioning a mobile terminal, and the mobile terminal provided by the disclosure, the server can be used to send a push notification to the mobile terminal after the user finds that the mobile terminal is lost. The mobile terminal positions geographical position information thereof and sends the geographical position information to the server to help the user retrieve the mobile terminal.

### BRIEF DESCRIPTION OF THE DRAWINGS

Fig. 1 shows a schematic diagram of a flow of an embodiment of a method for protecting data in a mobile terminal of the disclosure;
Fig. 2 shows a schematic diagram of a flow of another embodiment of a method for protecting data in a mobile terminal of the disclosure;
Fig. 3 shows a schematic diagram of a structure of an embodiment of a system for positioning a mobile terminal of the disclosure;
Fig. 4 shows a schematic diagram of a structure of another embodiment of a system for positioning a mobile terminal of the disclosure;
Fig. 5 shows a schematic diagram of a structure of an embodiment of a mobile terminal of the disclosure; and
Fig. 6 shows a schematic diagram of a structure of another embodiment of the mobile terminal of the disclosure.

The achievement of the purpose of the disclosure, functional characteristics and advantages of the disclosure will be described with reference to the embodiments and drawings in detail.

### DETAILED DESCRIPTION

The technical solution of the disclosure is described below with reference to the drawings of the description and the specific embodiments in detail.

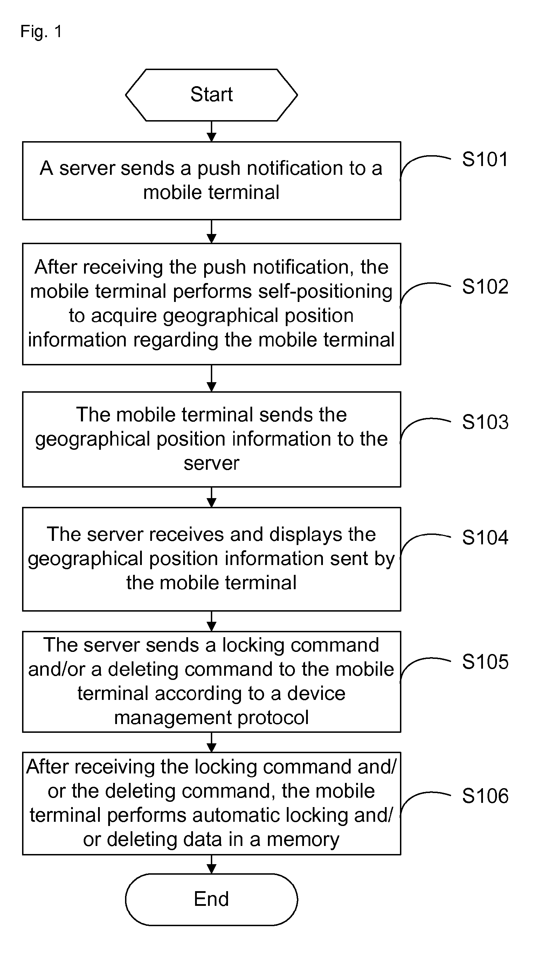

Fig. 1 shows a schematic diagram of a flow of an embodiment of a method for protecting data in a mobile terminal of the disclosure.

After a mobile terminal is lost, when a finder or a thief does not turn off the mobile terminal, its user logs in a server in time to report loss, and registers an International Mobile Equipment Identity (IMEI) of the mobile terminal. As shown in Fig. 1, a method for protecting data in a mobile terminal of the disclosure comprises the following steps.

Step S101: a server sends a push notification to a mobile terminal.

In this embodiment, the push notification can be sent to the mobile terminal through the server so as to notify the mobile terminal to be positioned via the push notification. In addition, the mobile terminal is registered with an inbound network connection for a positioning program, and the mobile terminal monitors whether the push notification sent by the monitoring mobile terminal is received on the registered inbound network connection. The inbound network connection is registered for the positioning program in a static registration manner or a dynamic registration manner. The static registration will be taken as an example in this embodiment for description.

The server inquires an International Mobile Subscriber Identity (IMSI) of the mobile terminal according to the IMEI of the mobile terminal registered by the user, acquires a mobile phone number of the mobile terminal according to the IMSI number, and then sends the push notification to the mobile terminal according to the mobile phone number to require the mobile terminal to be positioned.

Furthermore, a Java Application Description (JAD) file of the mobile terminal is further provided with the MIDlet-Push-<1> attribute, for example the attribute is set as:
MIDlet-Push-1:sms://:8080,MIDletLocation,13900000000; after the attribute is added, it indicates a connection protocol adopted is a Short Messaging Service (SMS) protocol, a registered listening port number is 8080, a type name of MIDlet is MIDletLocation, and the effective source of the push notification is the server with the number of 13900000000. Besides the SMS protocol, the disclosure can also use a transmission control protocol or a user datagram protocol of course, which is not restricted in the disclosure.

Step S102: after receiving the push notification, the mobile terminal performs self-positioning to acquire geographical position information regarding the mobile terminal.

In the embodiment, the positioning program is a location Application Programming Interface (API) for Java 2 Micro Edition (J2ME) program, which meets Java Specification Request (JSR) 179 specification. The location API for J2ME program is an optional package of J2ME configured to position the mobile equipment. In this embodiment, the location API for J2ME program can utilize a satellite positioning method based on a Global Positioning System (GPS), a positioning method of a cellular network, or a Bluetooth-based short-range positioning method, or may combine the above manners.

Step S103: the mobile terminal sends the geographical position information to the server.

In the embodiment, the geographical position information comprises longitude and latitude information of the mobile terminal.

Step S104: the server receives and displays the geographical position information sent by the mobile terminal.

In the embodiment, the server can call a map program to display the longitude and latitude information of the mobile terminal, and now the user can see a specific position of the mobile terminal, and retrieve the mobile terminal according to the geographical position information.

Step S105: the server sends a locking command and/or a deleting command to the mobile terminal according to a device management protocol.

In the embodiment, the server sends a Lock And Wipe Management Object (LAWMO) command to the mobile terminal according to a Device Management (DM) protocol defined by Open Mobile Alliance (OMA). The server sends the locking command to the mobile terminal through the device management protocol in a Synchronization Markup Language (SyncML) protocol set.

Step S106: after receiving the locking command and/or the deleting command, the mobile terminal performs automatic locking and/or deleting data in a memory. After the mobile terminal automatically locks, no operation can be performed on the mobile terminal before unlocking. Of course, if the mobile user only desires to know the specific position of the mobile terminal without performing locking and/or deleting operation on the mobile terminal, step S105 and step S106 are not the necessary steps.

In the embodiment, the server can be used to send the push notification to the mobile terminal after the user finds the mobile terminal is lost; the mobile terminal positions the geographical position information thereof and sends the geographical position information to the server to help the user retrieve the mobile terminal.

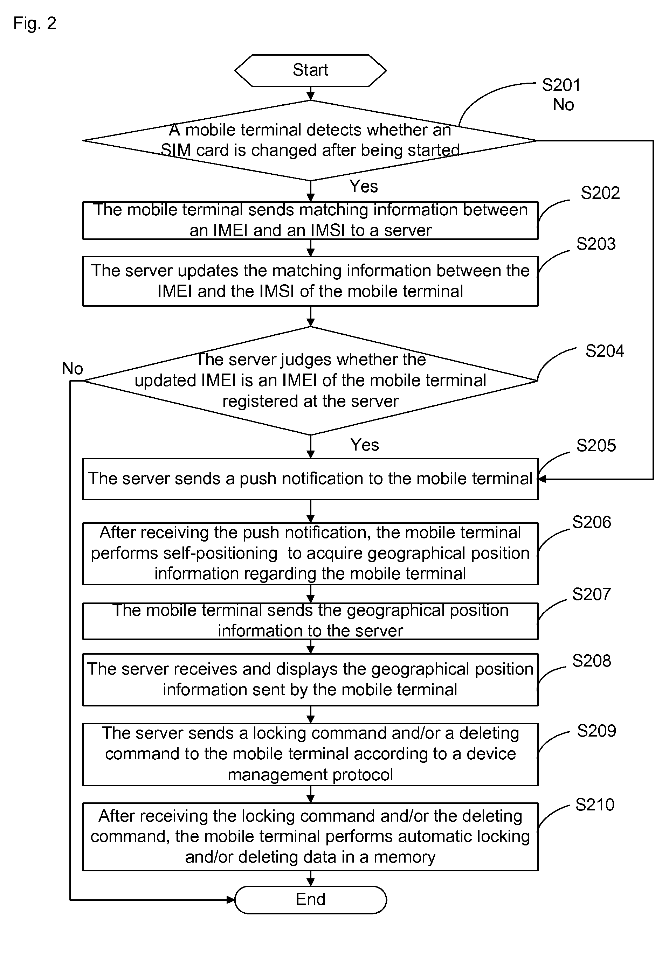

Fig. 2 shows a schematic diagram of a flow of another embodiment of a method for protecting data in a mobile terminal of the disclosure.

When a mobile terminal is lost, if a finder or a thief turns off the mobile terminal due to low battery or the desire to change a Subscriber Identity Module (SIM) card, when the finder or the thief turns on the mobile terminal again, the mobile terminal will protect data based on the following steps.

Step S201: the mobile terminal detects whether an SIM card is changed after being started; if yes, turn to step S202; otherwise, turn to step S205.

In the embodiment, after the mobile terminal is started, it automatically starts the SIM card verification kit to verify whether the IMSI of the SIM card is changed; if yes, it indicates the SIM card of the mobile terminal is changed. The method for automatically starting the SIM card detection function after startup is as follows:
the MIDlet-1-Type:autostart attribute is added in the Java application description file of the terminal, and meanwhile an autostart permission is also added in the Java application description file in the specific format of:
   MIDlet-Permissions:javax.microedition.midlet.Autostart Permission.

Step S202: the mobile terminal sends matching information between an IMEI and an IMSI to the server.

In the embodiment, the mobile terminal sends matching information between an IMEI and an IMSI to a server through a short message.

Step S203: the server updates the matching information between the IMEI and the IMSI of the mobile terminal.

In the embodiment, after receiving the short message, the server updates the matching information between the IMEI and the IMSI of the mobile terminal through modifying an IMSI number corresponding to the IMEI of the mobile terminal.

Step S204: the server judges whether the updated IMEI is an IMEI of the mobile terminal registered at the server; if yes, turn to step S205; otherwise, the flow is terminated.

Step S205: the server sends a push notification to the mobile terminal.

In the embodiment, the server inquires an IMSI number of the mobile terminal according to the IMEI of the mobile terminal registered by the user, acquires a mobile phone number of the mobile terminal according to the IMSI number, and then sends a push notification to the mobile terminal according to the mobile phone number to require the mobile terminal to be positioned.

In addition, the Java application description file of the mobile terminal is provided with the MIDlet-Push-<1> attribute, which is:
MIDlet-Push-1:sms://:8080,MIDletLocation,13900000000. After the attribute is added, it indicates a connection protocol adopted is an SMS protocol, a registered listening port number is 8080, a type name of MIDlet is MIDletLocation, and the effective source of the push notification is the server with the number of 13900000000. Besides the SMS protocol, the disclosure can also use a transmission control protocol or a user datagram protocol of course, which is not restricted in the disclosure.

Step S206: after receiving the push notification, the mobile terminal performs self-positioning to acquire geographical position information regarding the mobile terminal.

In the embodiment, the positioning program is a location API for J2ME program, which meets JSR 179 specification. The location API for J2ME program is an optional package of J2ME configured to position the mobile equipment. In this embodiment, the location API for J2ME program can utilize a satellite positioning method based on a GPS, a positioning method of a cellular network, or a Bluetooth-based short-range positioning method, or may combine the above manners.

Step S207: the mobile terminal sends the geographical position information to the server.

In the embodiment, the geographical position information comprises at least longitude and latitude information of the mobile terminal.

Step S208: the server receives and displays the geographical position information sent by the mobile terminal.

In the embodiment, the server can call a map program to display the longitude and latitude information of the mobile terminal, and now the user can see a specific position of the mobile terminal, and retrieve the mobile terminal according to the geographical position information.

Step S209: the server sends a locking command and/or a deleting command to the mobile terminal according to a device management protocol.

In the embodiment, the server sends an LAWMO command to the mobile terminal according to a device management protocol defined by open mobile alliance. The server sends the locking command to the mobile terminal through the device management protocol in a SyncML protocol set.

Step S210: after receiving the locking command and/or the deleting command, the mobile terminal performs automatic locking and/or deleting data in a memory. After the mobile terminal automatically locks, no operation can be performed on the mobile terminal before unlocking. Of course, if the mobile user only desires to know the specific position of the mobile terminal without performing locking and/or deleting operation on the mobile terminal, step S209 and step S21 0 are not the necessary steps.

In the embodiment, when the mobile terminal is lost, if a finder or a thief turns off the mobile terminal due to low battery or the desire to change an SIM card, when the finder or the thief turns on the mobile terminal again, the mobile terminal firstly verifies whether the SIM card of the mobile terminal is changed; if the SIM card is not changed, the server is directly used to send a push notification to the mobile terminal; and if the SIM card is changed, the IMSI after the SIM card is changed is firstly acquired, then a push notification is sent to the mobile terminal; the mobile terminal positions geographical position information thereof after receiving the push notification, and sends the geographical position information to the server to help the user retrieve the mobile terminal. Therefore, data in the lost mobile terminal is prevented from being leaked, and personal information security of the user is ensured.

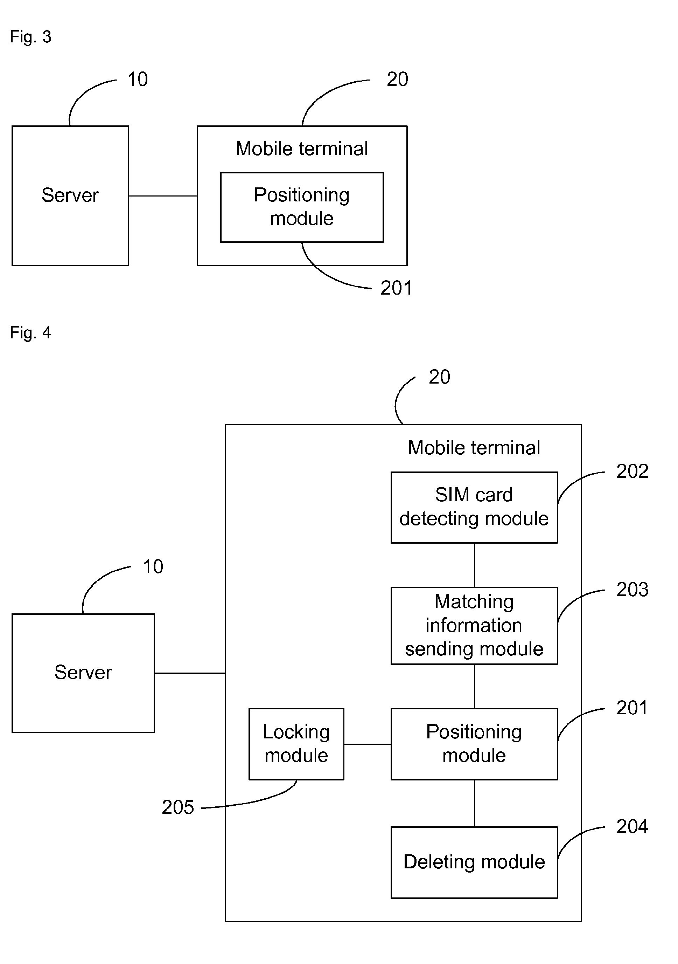

Fig. 3 shows a schematic diagram of a structure of an embodiment of a system for positioning a mobile terminal of the disclosure.

The system for positioning a mobile terminal comprises a server 10 and a mobile terminal 20, wherein the mobile terminal 20 comprises a positioning module 201.

The server is configured to send a push notification to the mobile terminal 20, and to receive geographical position information sent by the mobile terminal 20; the positioning module 201 is configured to perform self-positioning after receiving the push notification, so as to acquire the geographical position information regarding the mobile terminal 20, and to send the geographical position information to the server 10.

In the embodiment, the server 10 can be used to send a push notification to the mobile terminal 20 after the user finds that the mobile terminal 20 is lost. The mobile terminal 20 locates geographical position information thereof through the positioning module 201 and sends the geographical position information to the server 10 to help the user retrieve the mobile terminal 20.

Fig. 4 shows a schematic diagram of a structure of another embodiment of a system for positioning a mobile terminal of the disclosure.

The server 10 is further configured to send a locking command and/or a deleting command to the mobile terminal according to a device management protocol. Besides the positioning module 201, the mobile terminal 20 further comprises a locking module 205 and a deleting module 204, an SIM card detecting module 202 and a matching information sending module 203.

The locking module 205 is configured to lock the mobile terminal 20 after receiving the locking command. The deleting module 204 is configured to delete data in a memory after receiving the deleting command. The SIM card detecting module 202 is configured to detect whether an SIM card of the mobile terminal is changed. The matching information sending module 203 is configured to send matching information between an IMEI and an IMSI to the server when the SIM card is changed.

The server 10 is further configured to update the matching information between the IMEI and the IMSI of the mobile terminal 20 registered at the server after receiving the matching information between the IMEI and the IMSI, and to judge whether the updated IMEI is an IMEI of the mobile terminal registered at the server 10.

In the embodiment, after the mobile terminal 20 is lost, if a finder or a thief turns off the mobile terminal 20 due to low battery or the desire to change an SIM card, when the finder or the thief turns on the mobile terminal 20 again, the mobile terminal firstly verifies whether the SIM card of the mobile terminal 20 is changed; if the SIM card is not changed, the server 10 is directly used to send a push notification to the mobile terminal 20; and if the SIM card is changed, the IMSI after the SIM card is changed is firstly acquired, then a push notification is sent to the mobile terminal 20; the mobile terminal 20 positions geographical position information thereof through the positioning module 201 after receiving the push notification, and sends the geographical position information to the server 10 to help the user retrieve the mobile terminal 20. Therefore, data in the mobile terminal 20 is prevented from being leaked, and personal information security of the user is ensured.

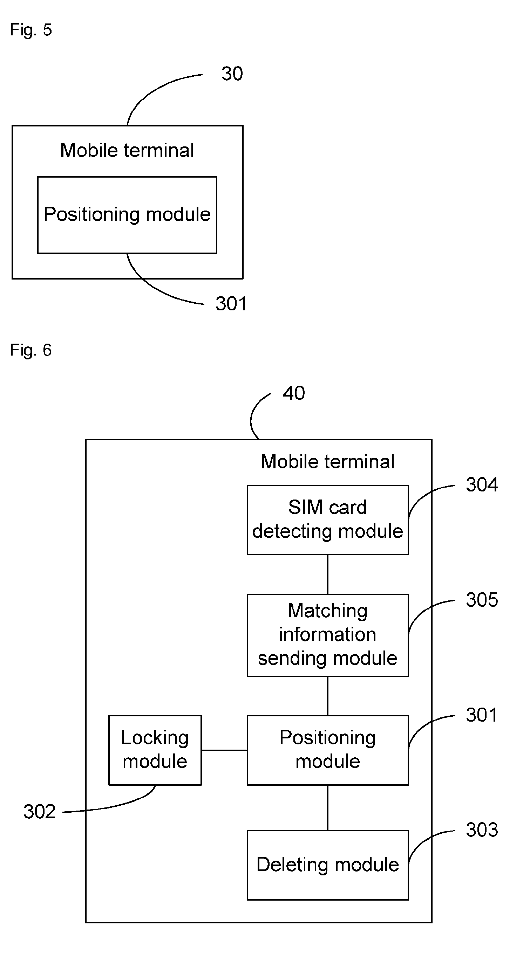

Fig. 5 shows a schematic diagram of a structure of an embodiment of a mobile terminal of the disclosure.

The mobile terminal 30 comprises a positioning module 301, which is configured to perform self-positioning after receiving a push notification to acquire geographical position information regarding the mobile terminal 30, and send the geographical position information to a server.

In the embodiment, the server can be used to send a push notification to the mobile terminal 30 after the user finds that the mobile terminal 30 is lost. The mobile terminal 30 positions geographical position information thereof and sends the geographical position information to the server to help the user retrieve the mobile terminal 30.

Fig. 6 shows a schematic diagram of a structure of another embodiment of the mobile terminal of the disclosure.

Besides the positioning module 301, the mobile terminal 40 further comprises a locking module 302, a deleting module 303, an SIM card detecting module 304, and a matching information sending module 305.

The locking module 302 is configured to lock the mobile terminal 40 after receiving a locking command sent by a server; the deleting module 303 is configured to delete data in a memory after receiving a deleting command sent by the server. The SIM card detecting module 304 is configured to detect whether an SIM card is changed. The matching information sending module 305 is configured to send matching information between an IMEI and an IMSI to the server when the SIM card of the mobile terminal is changed.

In the embodiment, after the mobile terminal 40 is lost, if a finder or a thief turns off the mobile terminal 40 due to low battery or the desire to change an SIM card, when the finder or the thief turns on the mobile terminal 40 again, the mobile terminal firstly verifies whether the SIM card of the mobile terminal 40 is changed; if the SIM card is not changed, the server is directly used to send a push notification to the mobile terminal 40; and if the SIM card is changed, the IMSI after the SIM card is changed is firstly acquired, then a push notification is sent to the mobile terminal 40; the mobile terminal 40 positions geographical position information thereof through the positioning module 301 after receiving the push notification, and sends the geographical position information to the server to help the user retrieve the mobile terminal 40. Therefore, data in the mobile terminal 40 is prevented from being leaked, and personal information security of the user is ensured.

The above is only the preferred embodiment of the disclosure and not intended to limit the scope of the patent, and any equivalent structure or equivalent flow transformation based on the description and drawings of the disclosure, which is directly or indirectly applied in other related technical fields shall fall within the scope of patent protection of the disclosure.

## Claims

1. A method for positioning a mobile terminal, comprising:
sending, by a server, a push notification to a mobile terminal;
performing, by the mobile terminal, self-positioning after receiving the push notification, to acquire geographical position information regarding the mobile terminal;
sending, by the mobile terminal, the geographical position information to the server; and
receiving and outputting, by the server, the geographical position information sent by the mobile terminal.

2. The method according to claim 1, further comprising: after the step of receiving and outputting, by the server, the geographical position information sent by the mobile terminal,
sending, by the server, a locking command and/or a deleting command to the mobile terminal according to a device management protocol; and
performing, by the mobile terminal, automatic locking and/or deleting, by the mobile terminal, data in a memory, after receiving the locking command and/or the deleting command.

3. The method according to claim 1 or 2, further comprising: before the step of sending, by the server, the push notification to the mobile terminal,
sending, by the mobile terminal, matching information between an International Mobile Equipment Identity (IMEI) and an International Mobile User Identity (IMSI) of the mobile terminal to the server, when detecting that a Subscriber Identity Module (SIM) card has been changed after being started.

4. The method according to claim 3, further comprising:
updating, by the server, previous matching information between the IMEI and the IMSI of the mobile terminal according to the received matching information between the IMEI and the IMSI of the mobile terminal, and further judging, by the server, whether the updated IMEI is an IMEI of the mobile terminal registered at the server.

5. A system for positioning a mobile terminal, comprising a server and a mobile terminal, wherein
the server is configured to send a push notification to the mobile terminal, and to receive geographical position information sent by the mobile terminal; and
the mobile terminal further comprises a positioning module, which is configured to perform self-positioning after receiving the push notification, so as to acquire the geographical position information regarding the mobile terminal, and to send the geographical position information to the server.

6. The system according to claim 5, wherein
the server is further configured to send a locking command and/or a deleting command to the mobile terminal according to a device management protocol; and
the mobile terminal further comprises a locking module and a deleting module, wherein the locking module is configured to lock the mobile terminal after receiving the locking command; the deleting module is configured to delete data in a memory of the mobile terminal after receiving the deleting command.

7. The system according to claim 5 or 6, wherein the mobile terminal further comprises a Subscriber Identity Module (SIM) card detecting module and a matching information sending module, wherein
the SIM card detecting module is configured to detect whether an SIM card of the mobile terminal is changed; and
the matching information sending module is configured to send matching information between an International Mobile Equipment Identity (IMEI) and an International Mobile User Identity (IMSI) of the mobile terminal to the server when the SIM card is changed.

8. The system according to claim 7, wherein
the server is further configured to update previous matching information between the IMEI and the IMSI of the mobile terminal after receiving the matching information between the IMEI and the IMSI, and to judge whether the updated IMEI is an IMEI of the mobile terminal registered at the server.

9. A mobile terminal, comprising a positioning module, which is configured to perform self-positioning after receiving a push notification from a server, so as to acquire geographical position information regarding the mobile terminal, and to send the geographical position information to the server.

10. The mobile terminal according to claim 9, further comprising a locking module and a deleting module, wherein the locking module is configured to lock the mobile terminal after receiving a locking command sent by the server; and the deleting module is configured to delete data in a memory of the mobile terminal after receiving a deleting command sent by the server.

11. The mobile terminal according to claim 9 or 10, further comprising:
a Subscriber Identity Module (SIM) card detecting module, which is configured to detect whether an SIM card of the mobile terminal is changed; and
a matching information sending module, which is configured to send matching information between an International Mobile Equipment Identity (IMEI) and an International Mobile User Identity (IMSI) to the server when the SIM card of the mobile terminal is changed.
